# EUROPEAN PATENT APPLICATION

(11) **EP 2 174 896 A1**
(43) Date of publication of application: **14.04.2010**
(21) Application number: 08764891.1
(22) Date of filing: 30.05.2008
(51) Int. Cl.: B65G 47/30, B65B 35/36, B65B 35/44

(54) **DEVICE FOR TRANSFERRING EGGS**

(30) Priority: 31.07.2007 JP 2007199503
(71) Applicant: Nabel Co., Ltd., Kyoto-shi Kyoto 601-8444 (JP)
(72) Inventor: TAKADA, Masataka, Kyoto 6018444 (JP)
(74) Representative: Prüfer & Partner GbR European Patent Attorneys
(86) International application number: PCT/JP2008/059973
(87) International publication number: WO 2009/016882

(57) **Abstract**

An egg transfer apparatus includes: a regulation plate (4) narrowing, during the process of conveying an egg transfer unit (3) having a predetermined number of retaining seats, each slidable crosswise to the conveying direction, the retaining seat pitch of the egg transfer unit (3) to a pitch substantially equal to the retaining seat pitch of a next-stage conveyer (20) in the lane direction; and an acceleration-ejection unit (5) urging, when an egg transfer unit (3) narrowed to a pitch substantially equal to the retaining seat pitch of the next-stage conveyer (20) in the lane direction by the regulation plate (4) arrives above the next-stage conveyer (20), the egg transfer unit (3) in a direction identical to the conveying direction of the next-stage conveyer (20) to synchronize the moving speed of the egg transfer unit (3) in the urging direction substantially with the conveying speed of the next-stage conveyer (20), and ejecting at one time the eggs (E) retained in the egg transfer unit (3) into retaining seats of the next-stage conveyer (20).

## Description

### TECHNICAL FIELD

The present invention relates to an egg transfer apparatus, more particularly to an egg transfer apparatus having eggs that are conveyed aligned crosswise in a predetermined number of rows with their major axes oriented horizontally from the upstream side, then received with the eggs major axes oriented vertically, and transferring the predetermined number of eggs to a next-stage conveyer such as a single lane conveyer.

### BACKGROUND ART

An egg transfer apparatus receiving, by means of a plurality of transfer cups, eggs that are conveyed aligned crosswise in a predetermined number of rows with their major axes oriented horizontally by a predetermined conveyer and then transferring the eggs with their major axes oriented vertically to a next-stage conveyer such as a single lane conveyer is well-known, as disclosed in Japanese Patent Laying-Open No. 50-97066 (Patent Document 1).

Patent Document 1 discloses an egg transfer apparatus including a plurality of transfer cups for receiving and transferring eggs in a rocking manner from a predetermined conveyer. A plurality of transfer cups are driven simultaneously to dwell in an elevated horizontal position and rotate downwardly, accelerating to approximately the conveying speed of the single lane conveyer while moving therewith in the same direction of travel.

Patent Document 1: Japanese Patent Laying-Open No. 50-97066

### DISCLOSURE OF THE INVENTION

### PROBLEMS TO BE SOLVED BY THE INVENTION

The aforementioned conventional egg transfer apparatus had problems, as will be set forth below. A predetermined conveyer is typically configured including 6 rows. When eggs are transferred from a predetermined conveyer to a single lane conveyer, the plurality of transfer cups are moved in a direction identical to the travel of the single lane conveyer while being accelerated to a speed approximately 6 to 7 times faster in simple calculation to transfer the eggs. Then, the plurality of transfer cups are driven to rotate downward and return to the former position to prepare for the next operation.

The time required for the plurality of transfer cups to return to the former position after delivering the eggs to the single lane conveyer is considered as extra time, which should be eliminated in view of high-speed processing.

The present invention is directed to solving the problems set forth above. An object of the present invention is to provide an egg transfer apparatus that can carry out the transfer processing of eggs to a next-stage conveyer stably and at high speed.

### MEANS FOR SOLVING THE PROBLEMS

The present invention according to an aspect is directed to an egg transfer apparatus including an endless delivery conveyer having a plurality of receptacle rows provided in a conveying direction for retaining eggs, each receptacle row having a predetermined number of retaining seats crosswise to the conveying direction, and a next-stage conveyer disposed below a predetermined position in a conveying path of the endless delivery conveyer in a direction crossing the conveying direction of the endless delivery conveyer. The eggs transferred by the endless delivery conveyer are transferred to the next-stage conveyer disposed in a crossing manner. The egg transfer apparatus includes an acceleration unit and an ejection unit. The acceleration unit urges the receptacle row in a direction identical to the conveying direction of the next-stage conveyer to approximate the conveying speed of the next-stage conveyer when each receptacle row of the endless delivery conveyer arrives above the next-stage conveyer. The ejection unit ejects the eggs located at the retaining seats of the receptacle row when the moving speed of the receptacle row in the urging direction is in synchronization with the conveying speed of the next-stage conveyer by the acceleration unit to the retaining seats of the next-stage conveyer.

According to the configuration, the transfer of eggs from the endless delivery conveyer to next-stage conveyer can be implemented smoothly.

Each of the predetermined number of retaining seats in the receptacle row of the endless delivery conveyer is attached in a slidable manner crosswise to the conveying direction. The egg transfer apparatus further includes a pitch modification unit modifying the retaining seat pitch of the receptacle row of the endless delivery conveyer to a pitch equal to the retaining seat pitch of the next-stage conveyer during the process of transferring eggs. When eggs are to be ejected from the endless delivery conveyer to the retaining seats of the next-stage conveyer by the ejection unit, the receptacle row having its pitch modified to a pitch equal to the retaining seat pitch of the next-stage conveyer preferably arrives above the next-stage conveyer.

Further, when the receptacle row of the endless delivery conveyer is urged in a direction identical to the conveying direction of the next-stage conveyer by the acceleration unit, a plurality of receptacle rows of the endless delivery conveyer are preferably urged simultaneously.

Accordingly, it is no longer necessary to take into account the conventional problem of the time required for the rocking egg seats (plurality of transfer cups) to return to the former position, thus allowing a margin in the transfer operation. Moreover, the high conveying speed of the next-stage conveyer can be accommodated.

According to another aspect of the present invention, an egg transfer apparatus includes an endless delivery conveyer having a plurality of receptacle rows provided in a conveying direction for retaining eggs, each receptacle row having a predetermined number of retaining seats attached in a slidable manner crosswise to the conveying direction, and a next-stage conveyer disposed below a site partway in a conveying path of the endless delivery conveyer in a direction crossing the conveying direction of the endless delivery conveyer. The egg transfer apparatus moves the eggs transferred by the endless delivery conveyer to the next-stage conveyer disposed in a crossing manner. The egg transfer apparatus includes a pitch modification unit and an ejection unit. The pitch modification unit modifies the retaining seat pitch in the receptacle row of the endless delivery conveyer to a pitch equal to the retaining seat pitch of the next-stage conveyer during the process of conveying the eggs. The ejection unit ejects the eggs located at the retaining seats of the receptacle row to the retaining seats of the next-stage conveyer when the receptacle row having its pitch modified to a pitch equal to the retaining seat pitch of the next-stage conveyer by the pitch modification unit arrives above the next-stage conveyer.

According to the configuration, the transfer of eggs from the endless delivery conveyer to the next-stage conveyer can be implemented smoothly without having to use an intermediate bucket, for example, or the like, while modifying the pitch between the endless delivery conveyer and the next-stage conveyer.

The egg transfer apparatus also includes an acceleration unit urging the receptacle row in a direction identical to the conveying direction of the next-stage conveyer to approximate the conveying speed of the next-stage conveyer when each receptacle row of the endless delivery conveyer arrives above the next-stage conveyer. When eggs are ejected from the endless delivery conveyer to the retaining seats of the next-stage conveyer by the ejection unit, the moving speed of the receptacle row in the urging direction is preferably synchronized with the conveying speed of the next-stage conveyer.

Accordingly, the increased conveying speed of the next-stage conveyer can be accommodated. Moreover, it is no longer necessary to take into account the conventional problem of the time required for the rocking egg seats (plurality of transfer cups) to return to the former position, thus allowing a margin in the transfer operation. In other words, the process of transferring eggs to the next-stage conveyer can be carried out stably and at high speed.

The pitch modification unit is preferably a regulation plate to narrow the retaining seat pitch of the receptacle row to a pitch equal to the retaining seat pitch of the next-stage conveyer during the process of conveying the receptacle row.

Accordingly, the retaining seat pitch of the plurality of receptacle rows mounted on the endless delivery conveyer can be modified to a pitch substantially equal to the retaining seat pitch of the next stage conveyor with a simple configuration, dispensable of a complicated structure.

An invention according to a further aspect is directed to an egg transfer apparatus including an endless delivery conveyer, a next-stage conveyer, a regulation plate, an acceleration unit, and an ejection unit. The endless delivery conveyer has a plurality of receptacle rows provided in a conveying direction for retaining eggs. Each receptacle row has a predetermined number of retaining seats attached in a slidable manner crosswise to the conveying direction. The next-stage conveyer is disposed in a direction orthogonal to the conveying direction of the endless delivery conveyer, below a predetermined position in a conveying path of the endless delivery conveyer, and has retaining seats formed in a lane. The regulation plate narrows the retaining seat pitch of the receptacle row to a pitch equal to the retaining seat pitch of the next-stage conveyer in the lane direction during the process of conveying the receptacle row. The acceleration unit urges the receptacle row in a direction identical to the conveying direction of the next-stage conveyer to accelerate to the conveying speed of the next-stage conveyer when the receptacle row of the endless delivery conveyer narrowed to a pitch equal to the retaining seat pitch of the next-stage conveyer in the lane direction by the regulation plate arrives above the next-stage conveyer. The ejection unit ejects the eggs retained in the retaining seats of the receptacle row to the retaining seats of the next-stage conveyer when the moving speed of the receptacle row in the urging direction is in synchronization with the conveying speed of the next-stage conveyer by the acceleration unit.

An invention according to still another aspect of the present invention is directed to an egg transfer apparatus including an endless delivery conveyer, a next-stage conveyer, a regulation plate, and an acceleration-ejection unit. The endless delivery conveyer has a plurality of receptacle rows provided in the conveying direction for retaining eggs. Each receptacle row includes a predetermined number of retaining seats attached in a slidable manner crosswise to the conveying direction. The next-stage conveyer is disposed in a direction orthogonal to the conveying direction of the endless delivery conveyer below a predetermined position in the conveying path of the endless delivery conveyer, and has a retaining seat formed in a lane. The regulation plate narrows the retaining seat pitch of the receptacle row to a pitch equal to the retaining seat pitch in the lane direction of the next-stage conveyer during the process of conveying the receptacle row. The acceleration-ejection unit urges the receptacle row in a direction identical to the conveying direction of the next-stage conveyer to synchronize the moving speed of the receptacle row towards the urging direction with the conveying speed of the next-stage conveyer, when the receptacle row of the endless delivery conveyer narrowed to a pitch equal to the retaining seat pitch of the next-stage conveyer in the lane direction by the regulation plate arrives above the next-stage conveyer, and ejects eggs retained at the retaining seats of the receptacle row to the retaining seats of the next-stage conveyer.

In this case, the regulation plate preferably regulates each retaining seat in the receptacle row of the endless delivery conveyer at one side end of the endless delivery conveyer, and the acceleration-ejection unit urges the receptacle row narrowed to a pitch equal to the retaining seat pitch of the next-stage conveyer in the lane direction by the regulation plate from one side end towards the other side end crosswise to the conveying direction of the endless delivery conveyer.

By these configurations, increased conveying speed of the next-stage conveyer can also be accommodated. Moreover, it is no longer necessary to take into account the conventional problem of the time required for the rocking egg seats (plurality of transfer cups) to return to the former position, thus allowing a margin in the transfer operation. In other words, the process of transferring eggs to the next-stage conveyer can be carried out stably and at high speed.

### BRIEF DESCRIPTION OF THE DRAWINGS

Fig. 1 is a side view of an egg transfer apparatus according to a first embodiment of the present invention.
Fig. 2 is a partial enlarged plan view of the egg transfer apparatus in the first embodiment.
Fig. 3 represents a configuration of an egg transfer unit in the egg transfer apparatus of the first embodiment, wherein (a), (b) and (c) are a plan view, a side view, and a front view, respectively.
Fig. 4 is a perspective view of the egg transfer unit in the first embodiment.
Fig. 5 is a partial enlarged front view of the egg transfer unit in the first embodiment.
Fig. 6 is a partial perspective view of one bucket in a bucket group viewed obliquely from above in the first embodiment.
Fig. 7 is a side view of the one bucket of Fig. 6 in the first embodiment.
Fig. 8 is a partial plan view of an egg transfer apparatus according to a second embodiment of the present invention.

### DESCRIPTION OF THE REFERENCE CHARACTERS

1 sprocket, 2 endless chain, 3 egg transfer unit, 4 regulation plate, 11 endless delivery conveyer, 31 bucket, 32 slider, 33 slider, 34 fixture shaft, 35 movable shaft, 36 joint member, 37 fastening member, E egg, T transfer apparatus.

### BEST MODES FOR CARRYING OUT THE INVENTION

### (First Embodiment)

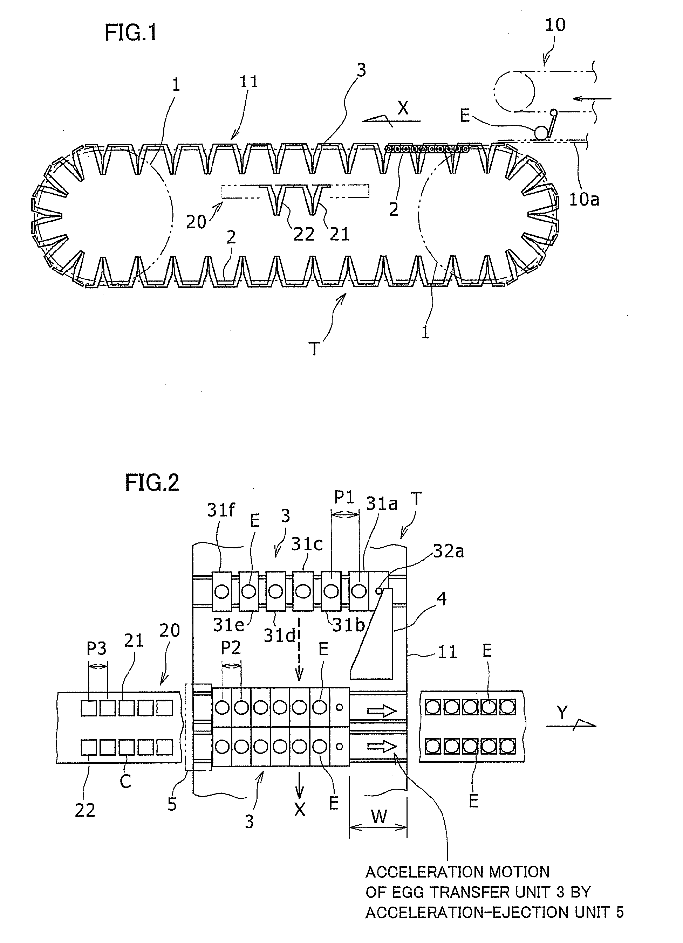

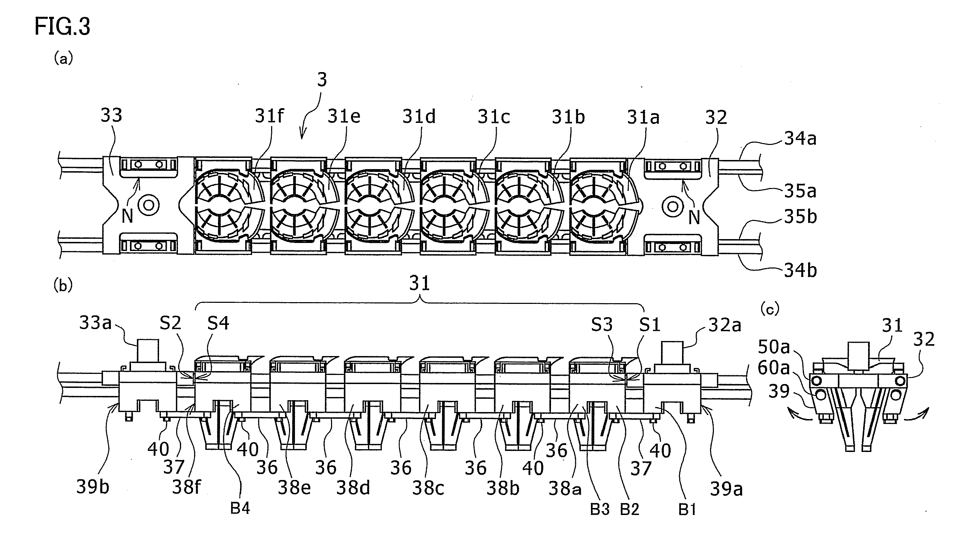

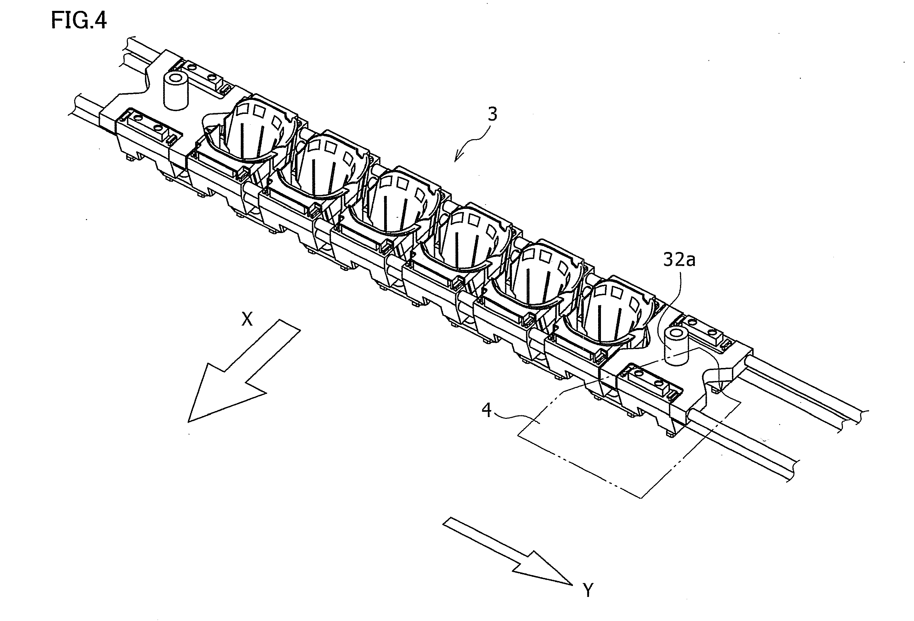

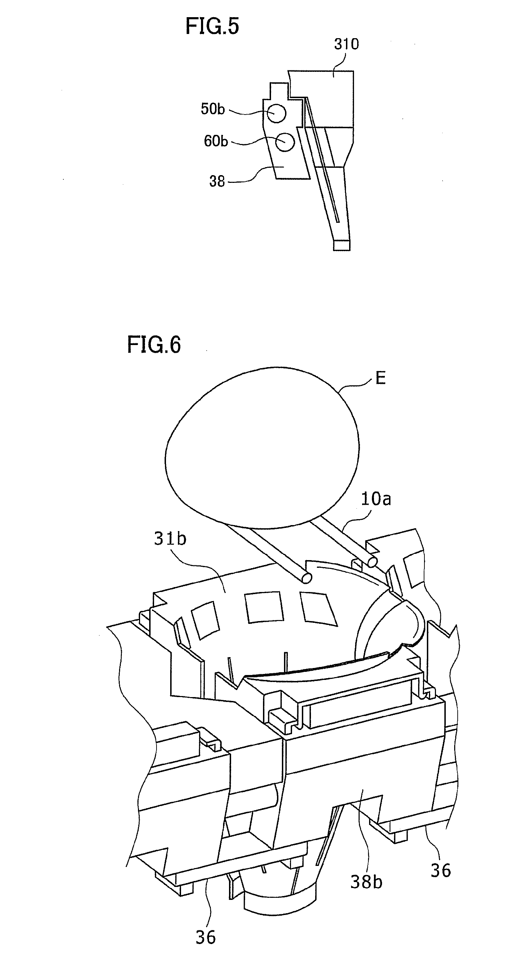

An egg transfer apparatus T according to a first embodiment of the present invention will be described hereinafter with reference to the drawings. Fig. 1 is a schematic side view of egg transfer apparatus T according to the first embodiment of the present invention. Fig. 2 is a schematic plan view of egg transfer apparatus T. Fig. 3 represents the details of an egg transfer unit 3 as a receptacle row of egg transfer apparatus T. Fig. 4 is a perspective view of egg transfer unit 3. Fig. 5 is a partial detailed view of egg transfer unit 3.

As shown in Fig. 1, egg transfer apparatus T according to the present embodiment includes an endless delivery conveyer 11 disposed in a direction generally identical to the conveying direction of a predetermined conveyer 10, and a next-stage conveyer 20 disposed in a direction crossing (orthogonal in the present embodiment) the conveying direction (X direction) of endless delivery conveyer 11.

Endless delivery conveyer 11 includes a pair of left and right sprockets 1 arranged at the leading side and trailing side in the conveying direction (X direction), an endless chain 2 wound around sprockets 1, and an egg transfer unit 3 as a receptacle row. A plurality of egg transfer units 3 are mounted with a predetermined pitch on endless chain 2. Each egg transfer unit 3 has six egg retaining seats attached in a slidable manner crosswise to the conveying direction for retaining eggs E oriented vertically. Endless delivery conveyer 11 includes, as shown in Fig. 2, a regulation plate 4 and an acceleration-ejection unit 5 that will be described afterwards.

Endless delivery conveyer 11, acceleration-ejection unit 5 and next-stage conveyer 20 are mechanically in cooperation, so that the synchronization between each mechanism will not be disturbed.

Next-stage conveyer 20 is disposed in a direction orthogonal to the conveying direction (X direction) of endless delivery conveyer 11, below a predetermined position in the conveying path of endless delivery conveyer 11. Specifically, at a predetermined position in the conveying path of endless delivery conveyer 11, next-stage conveyer 20 is disposed in a grade separated crossing manner at the under side of the forward path of endless chain 2 of endless delivery conveyer 11.

As shown in Fig. 2, next-stage conveyer 20 is constituted of a first single lane conveyer 21 and a second single lane conveyer 22. Each single lane conveyer has a plurality of cups C aligned in a lane at the pitch of P3 = 57.15 mm. One egg E is to be held in each cup. The plurality of cups C are conveyed in the Y direction.

Although the present embodiment has next-stage conveyer 20 configured based on a first single lane conveyer 21 and a second single lane conveyer 22, the number of single lane conveyers constituting next-stage conveyer 20 may be increased or decreased appropriately depending upon the processing capability of the processor disposed at the downstream side of next-stage conveyer 20.

At one side end of endless delivery conveyer 11 (the right side end in the drawing sheet), there is provided a regulation plate 4 of substantially a triangular shape to narrow the pitch of buckets 31a - 31f of egg transfer unit 3, during the process of conveying egg transfer unit 3 in the conveying direction (X direction), to a pitch substantially equal to the pitch of cups C in the lane direction (P3 = 57. 15 mm) of first and second single lane conveyers 21 and 22 of next-stage conveyer 20.

During the course of egg transfer unit 3 moving in the conveying direction (X direction) according to the configuration set forth above, a slide member 32a provided at transfer unit 3 abuts against the oblique side of regulation plate 4 to slide, whereby egg transfer unit 3 is moved to the other side end of endless delivery conveyer 11, i.e. in a direction opposite to the conveying direction (Y direction) of next-stage conveyer 20. The pitch of buckets 31a - 31f of egg transfer unit 3 is narrowed from P1 = 76.2 mm to P2 = 57.15 mm.

The predetermined space W defined by egg transfer unit 3 moved to the other side end of endless delivery conveyer 11 and the one side end of endless delivery conveyer 11 will be utilized for the operation of acceleration-ejection unit 5 that will be described afterwards.

Namely, acceleration-ejection unit 5 functions to urge, within the aforementioned space W, one egg transfer unit 3 and another egg transfer unit 3 having eggs E retained therein towards one side end of endless delivery conveyer 11 to synchronize the moving speed of the one egg transfer unit 3 and the other egg transfer unit 3 in the urging direction substantially with the conveying speed of next-stage conveyer 20. Accordingly, the increased conveying speed of next-stage conveyer 20 can be accommodated.

At a predetermined position in the return path of endless chain 2 (the position generally right below the site where regulation plate 4 is arranged), there is arranged an element (not shown) to cause the pitch of buckets 31a - 31f narrowed to 57.15 mm to the original pitch P1, i.e. to 76.2 mm. Accordingly, in the course of egg transfer unit 3 moving along the conveying direction (return path), the pitch of buckets 31a - 31f narrowed to 57.15 mm is gradually increased, so that the pitch of buckets 31a - 31f is restored to 76.2 mm in the event of receiving eggs E from predetermined conveyer 10. Thus, a margin will be allowed in the operation of receiving eggs E output from predetermined conveyer 10.

The present embodiment has been described based on, but not limited to, an example in which a regulation plate 4 is disposed at one side end of endless delivery conveyer 11, and egg transfer unit 3 is drawn towards the other side end of endless delivery conveyer 11, i.e. in the direction opposite to the conveying direction (Y direction) of next-stage conveyer 20, during the process of conveying egg transfer unit 3, such that buckets 31a - 31f take a narrower pitch as low as 57.15 mm. Regulation plate 4 may be provided at both side ends of endless delivery conveyer 11 such that buckets 31a - 31f of egg transfer unit 3 are narrowed in pitch around the center of endless delivery conveyer 11.

As shown in Fig. 2, egg transfer apparatus T includes an acceleration-ejection unit 5 to accelerate egg transfer unit 3 from the other side end of endless delivery conveyer 11 where regulation plate 4 is not provided towards the one side end where regulation plate 4 is provided, when egg transfer unit 3 retaining eggs E and having the pitch narrowed substantially equal to pitch P3 of cups C of next-stage conveyer 20 arrives short of the site immediately above next-stage conveyer 20, and to eject eggs E held in egg transfer unit 3 at one time towards cups C of first and second single lane conveyers 21 and 22 in synchronization with the conveying speed of next-stage conveyer 20.

The operation of acceleration-ejection unit 5 ejecting at one time six eggs E retained in egg transfer unit 3 to 6 cups C, respectively, of first and second single lane conveyers 21 and 22 of next-stage conveyer 20 will be described hereinafter with reference to Fig. 2.
(1) One egg transfer unit 3 retaining eggs E is conveyed in the X direction. The one egg transfer unit 3 arrives at a site where the distance between the virtual center line of the one egg transfer unit 3 crosswise to the conveying direction and the virtual center line of cups C on second single lane conveyer 22 of next-stage conveyer 20 (the center line in the direction identical to the conveying direction (Y direction) of next-stage conveyer 20) is approximately 85 mm.
(2) Acceleration-ejection unit 5 urges the one egg transfer unit 3 and another egg transfer unit 3 located immediately following the one egg transfer unit 3 towards the arrow direction (direction identical to the conveying direction (Y direction) of next-stage conveyer 20) by approximately 37.5 mm to accelerate each of egg transfer units 3.
(3) Acceleration-ejection unit 5 further urges the one egg transfer unit 3 and the other egg transfer unit 3 immediately following the one egg transfer unit 3 towards the arrow direction (identical to the conveying direction (Y direction) of next-stage conveyer 20) by approximately 75 mm to cause the one egg transfer unit 3 and the other egg transfer unit 3 to be substantially in synchronization with the conveying speed of next-stage conveyer 20.
(4) When the moving speed of the one egg transfer unit 3 and the other egg transfer unit 3 in the urging direction is substantially in synchronization with the conveying speed of next-stage conveyer 20 in response to the one egg transfer unit 3 and the other egg transfer unit 3 being urged in the arrow direction (direction identical to the conveying direction (Y direction) of next-stage conveyer 20), acceleration-ejection unit 5 ejects at one time eggs E retained in the one egg transfer unit 3 and the other egg transfer unit 3 to cups C of first and second single lane conveyers 21 and 22 of next-stage conveyer 20.
(5) In order to cause the urged one egg transfer unit 3 and the other egg transfer unit 3 to slow down, acceleration-ejection unit 5 effects deceleration while pushing the one egg transfer unit 3 and the other egg transfer unit 3 approximately 37.5 mm further in the arrow direction (the direction identical to the conveying direction (Y direction) of next-stage conveyer 20) to eventually cause the units to halt. Then, the urging mechanism (not shown) of acceleration-ejection unit 5 returns to the initial position.

In order to cause the one egg transfer unit 3 and the other egg transfer unit 3 to stop, an appropriate distance for deceleration may be provided for halting, or a stopper may be provided to cause the one egg transfer unit 3 and the other egg transfer unit 3 to halt at a predetermined position along the width relative to the conveying direction of endless delivery conveyer 11.

Egg transfer unit 3 of egg transfer apparatus T will be described hereinafter. As shown in (a) - (c) of Fig. 3, egg transfer unit 3 that is a receptacle row includes a bucket group 31 having six buckets 31a - 31f placed in parallel arrangement along the width relative to the conveying direction, each bucket having a retaining seat formed to hold an egg E, sliders 32 and 33 disposed to sandwich bucket group 31 at either end, a pair of fixture shafts 34a and 34b disposed at the leading side and trailing side in the conveying direction, connecting each of sliders 32 and 33 and the elements of bucket group 31 together in a skewered manner, movable shafts 35a and 35b disposed below the pair of fixture shafts 34a and 34b for connecting sliders 32 and 33 and holders 38 and 39 provided in each of buckets 31a - 31f in a skewered manner, a plate-like joint member 36 connecting bucket group 31 in a slidable manner, and a plate-like fastening member 37 connecting both ends of bucket group 31 with sliders 32 and 33.

As shown in Fig. 5, each of buckets 31a - 31f constituting the bucket group includes a semi-conical bucket member 310, and a holder 38 holding the upper end of bucket member 310, which are arranged opposite each other. Holder 38 includes a hole 50b through which fixture shafts 34a and 34b pass, and a hole 60b through which movable shafts 35a, 35b pass.

As shown in Fig. 3 (c), cylindrical slide members 32a and 33a for abutting against the oblique side of regulation plate 4 for sliding are provided at the top face of sliders 32 and 33. At the side ends of sliders 32 and 33, a hole 50a through which fixture shafts 34a and 34b pass is formed at two sites. Further, a hole 60a through which movable shafts 35a and 35b pass is formed at two sites.

As shown in Fig. 3 (a), holders 39a and 39b having a shape identical to that of holder 38 are fitted in each rectangular notch N of sliders 32 and 33. Fixture shafts 34a and 34b are passed through holes 50a of sliders 32 and 33 and hole 50b of each of holders 38a - 38e in bucket group 31. Movable shafts 35a and 35b are passed through holes 60a of holders 39a and 39b and hole 60b of holders 38a - 38f. Accordingly, sliders 32 and 33 as well as each element of bucket group 31 are hanging in a skewered manner.

The method of connecting sliders 32, 33 and bucket group 31 will be described hereinafter. As shown in Fig. 3 (b), slider 32 has one side end S 1 abutting against the other side end S3 of holder 38a that supports bucket 31a. Similarly, slider 33 has the other side end S2 abutting against one side end S4 of holder 39f that supports bucket 31f.

In this state, one lower end B 1 of holder 39a fitted in slider 32 is connected with the other lower end B2 of holder 3 8a that supports bucket 31a by a plate-like fastening member 37, which are fastened and secured by a hexagon socket head cap screw 40. The method of connecting the other slider 33 with holder 38f that supports bucket 31f is as set forth above, and will not be repeated.

The method of connecting each of buckets 31a - 31f in bucket group 31 will be described hereinafter. As shown in Fig. 3 (b), one lower end B3 of holder 38a that supports bucket 31a and the other lower end B4 of holder 39f that supports bucket 31f are connected with the lower ends of each of holders 38b - 38e of buckets 31b - 31e by means of plate-like joint member 36 having a longitudinal hole formed. This longitudinal hole is larger than the diameter of hexagon socket head cap screw 40.

By pushing sliders 32 and 33 located at respective ends according to the above-described configuration inwardly, bucket group 31 slides along fixture shafts 34a and 34b and movable shafts 35a and 35b, and the pitch between buckets 31a - 31f is modified to 57.15 mm. Conversely, when sliders 32 and 33 located at respective ends are pulled outwardly, bucket group 31 slides along fixture shafts 34a and 34b and movable shafts 35a and 35b, and the pitch between buckets 31a - 31f is modified to 76.2 mm.

Thus, as egg transfer unit 3 is moved in the conveying direction (X direction), as shown in Fig. 4, cylindrical slide member 32a attached to slider 32 slides along the oblique side of regulation plate 4 indicated by the chain line with two dots, whereby the pitch between buckets 31a - 31f is gradually narrowed to eventually attain the minimum pitch, i.e. the pitch between buckets 31a - 31f is modified to 57.15 mm.

By virtue of a regulation plate (not shown) disposed at a predetermined position in the return path of endless chain 2 (substantially immediately below the site where regulation plate 4 is located), the pitch of buckets 31a - 31f narrowed to 57.15 mm is gradually increased as egg transfer unit 3 moves in the conveying direction (return path). At the time of receiving eggs E from predetermined conveyer 10, pitch P1 of buckets 31a - 31f will take the initial value of 76.2 mm.

As shown in Fig. 3 (c), bucket group 31 functions in response to an opening/closing mechanism (not shown) of acceleration-ejection unit 5, causing movable shafts 35a and 35b to rotate in the arrow direction with the center axis of fixture shafts 34a and 34b as the fulcrum. Thus, each of bucket members 310 mutually moves away in a hinging manner to open.

Fig. 6 represents one of buckets 31a - 31f (bucket 31b in the drawing) constituting the bucket group, viewed obliquely from above. As shown in Fig. 6, bucket 31b has the upper end region of the right side, viewed with respect to the sheet plane, protruding outwards. The inner wall of the upper end region protruding outwards is formed to take a smooth curve.

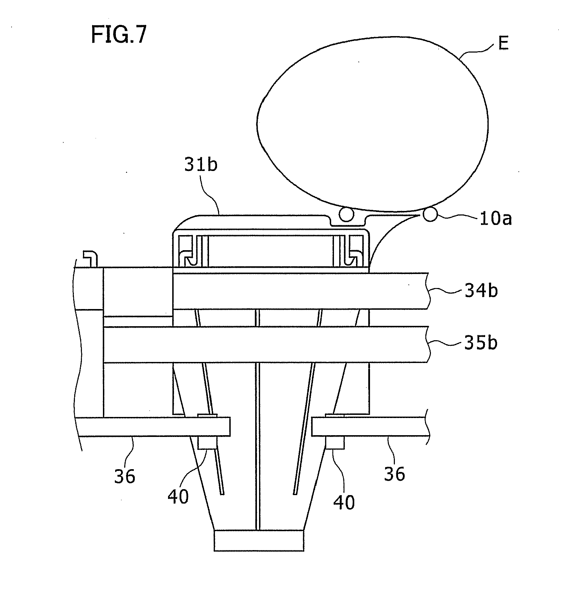

Fig. 7 is a side view of bucket 31b. For the sake of simplification, holder 38b is not depicted in the drawing. Egg E has been conveyed supported on two guides 10a, with the major axis oriented horizontally. By virtue of the upper end region of bucket 31b formed protruding outwards, as shown in Fig. 7, egg E has its outer periphery face in the short axis direction (the equatorial region of egg E) first located on the outwardly-protruding upper end region, when the support by guide 10a is released, to then slide down along the inner wall of the upper end region with its sharper end side oriented downwards. Thus, egg E is reliably retained in a bucket with the major axis oriented vertically.

By first and second single lane conveyers 21 and 22 constituting next-stage conveyer 20 in egg transfer apparatus T of the present embodiment, the transfer of eggs E from endless delivery conveyer 11 to next-stage conveyer 20 is conducted by urging a plurality of egg transfer units 3 (the one egg transfer unit 3 and the other egg transfer unit 3) simultaneously to eject eggs E retained in the plurality of egg transfer units 3 to next-stage conveyer 20 at one time.

In the case where next-stage conveyer 20 includes only one single lane conveyer, the egg transfer apparatus may be configured to urge one egg transfer unit 3. In the case where next-stage conveyer 20 includes three, for example, single lane conveyers, the egg transfer apparatus may be configured to urge three eggs transfer units 3 at the same time.

The present embodiment has been described based on an example in which acceleration-ejection unit 5 carries out the series of operations of acceleration → synchronization → ejection in the event of ejecting eggs E retained in egg transfer unit 3 to respective cups C of a first and second single lane conveyers 21 and 22 of next-stage conveyer 20 at one time. The present invention is not limited thereto, and a modification set forth below may be employed.

For example, an acceleration unit is disposed at the position indicated by reference number 5 in Fig. 2, and an ejection unit is disposed at a position opposite the acceleration unit. When the one egg transfer unit 3 and the other egg transfer unit 3 arrive short of the site immediately above next-stage conveyer 20, the acceleration unit urges the one egg transfer unit 3 and the other egg transfer unit 3 in a direction identical to the conveying direction (Y direction) of next-stage conveyer 20 to synchronize the moving speed of the one egg transfer unit 3 and the other egg transfer unit 3 in the urging direction substantially with the conveying speed of next-stage conveyer 20, and the ejection unit ejects at one time the eggs retained in the one egg transfer unit 3 and the other egg transfer unit 3 to respective cups C in the first and second single lane conveyers 21 and 22 of next-stage conveyer 20.

Although the aforementioned modification is based on an example in which the acceleration unit is disposed at the site corresponding to reference number 5 in Fig. 2 and ejection unit is disposed at a position opposite to the acceleration unit, another modification as set forth may be employed.

For example, only an ejection unit may be disposed at the position corresponding to reference number 5 in Fig. 2 (the acceleration unit is not disposed). By means of regulation plate 4, the one egg transfer unit 3 and the other egg transfer unit 3 are regulated at one side end of endless delivery conveyer 11 to have the pitch narrowed substantially equal to the pitch of cups C (P3 = 57.15 mm) in the lane direction of first and second single lane conveyers 21 and 22 of next-stage conveyer 20.

When the one egg transfer unit 3 and the other egg transfer unit 3 narrowed in pitch arrive short of the site immediately above next-stage conveyer 20, the ejection unit may eject at one time eggs E retained in the one egg transfer unit 3 and the other egg transfer unit 3 toward respective cups C in first and second single lane conveyers 21 and 22 of next-stage conveyer 20. In this case, it should be noted that first and second single lane conveyers 21 and 22 of next-stage conveyer 20 must halt every time eggs E are received.

### (Second Embodiment)

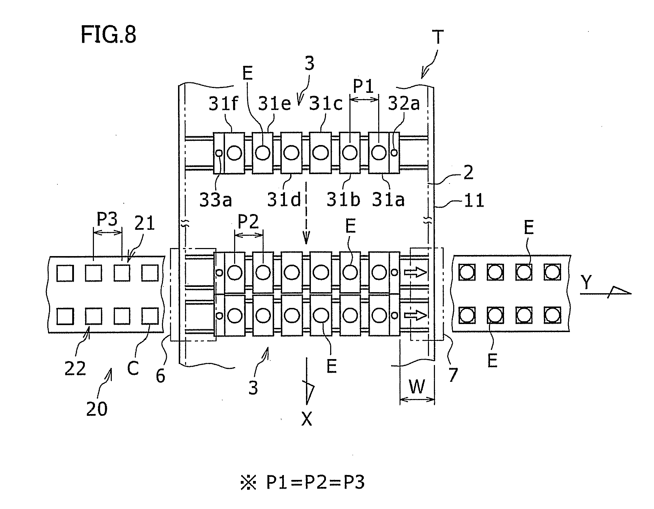

An egg transfer apparatus T according to a second embodiment of the present invention will be described hereinafter according to the drawings. Fig. 8 is a schematic plan view of an egg transfer apparatus T according to the second embodiment. Elements common to those of egg transfer apparatus T of Fig. 2 have the same reference characters allotted, and description thereof will not be repeated.

The basic configuration of egg transfer apparatus T of the present embodiment is substantially similar to egg transfer apparatus T of the first embodiment. As shown in Fig. 8, egg transfer apparatus T of the present embodiment includes an endless delivery conveyer 11, an acceleration unit 6, an ejection unit 7 disposed at a site opposite acceleration unit 6, and a next-stage conveyer 20.

As appreciated by the comparison between Figs. 8 and 2, egg transfer apparatus T of the present embodiment is absent of a regulation plate 4 functioning as a pitch modification unit modifying the pitch between each of buckets 31a - 31f of egg transfer unit 3 during the process of conveying egg transfer unit 3 to a pitch substantially equal to the pitch of cups C (P3 = 57.15 mm) in the lane directions of first and second single lane conveyers 21 and 22 of next-stage conveyer 20.

Egg transfer unit 3 identified as a receptacle row, placed in plurality at endless delivery conveyer 11, differs from the first embodiment in that the pitch between buckets 31a - 31f of egg transfer unit 3 is not variable. Namely, buckets 31a - 31f are arranged in parallel at a predetermined pitch P1 (P1 = 76.2 mm) along the width of the conveying direction.

Egg transfer unit 3 will be described hereinafter. The features differing from those of the first embodiment lie in that holders 39a and 39b fitted in sliders 32 and 33, respectively, are connected with holders 38a - 38f supporting buckets 31a - 31f, respectively, by means of joint member 36 and fastening member 37, which are fastened and secured by hexagon socket head cap screw 40. In this case, a longitudinal hole larger in diameter than hexagon socket head cap screw 40, described in the first embodiment, is not formed since joint member 36 fastens each of buckets 31a - 31f at a predetermined pitch P1. Substantially, joint member 36 has a configuration similar to that of fastening member 37 (for reference, refer to Fig. 3).

By the above configuration, endless delivery conveyer 11 can retain eggs E conveyed in a plurality of rows such as 6 rows (pitch between eggs is 76.2 mm) with the major axes oriented horizontally by a predetermined conveyer 10 into buckets 31a - 31f of egg transfer unit 3 sequentially delivered through circulating transportation with the major axes oriented vertically, and convey the eggs towards the downstream side (X direction) while maintaining the pitch between eggs E retained in buckets 31a - 31f, i.e. at PI = 76.2 mm.

As shown in Fig. 8, acceleration unit 6 is provided at a predetermined position of the downstream side of endless delivery conveyer 11, at one side end, and ejection unit 7 is provided at the other side end opposite to the position where acceleration unit 6 is provided.

Next-stage conveyer 20 is disposed below a predetermined position in the conveying path of endless delivery conveyer 11, in a direction (orthogonal in the present embodiment) crossing the conveying direction (X direction) of endless delivery conveyer 11. Specifically, at a predetermined position in the conveying path of endless delivery conveyer 11, next-stage conveyer 20 is disposed in a grade separated crossing manner at the under side of the forward path of endless chain 2 of endless delivery conveyer 11.

Next-stage conveyer 20 is constituted of a first single lane conveyer 21 and a second single lane conveyer 22, each single lane conveyer having a plurality of cups C formed in a lane at a predetermined pitch of P3 (P3 = 76.2 mm). One egg E is to be held in each cup. The plurality of cups C are conveyed in the Y direction towards a processor arranged at the downstream side.

Although the present embodiment has next-stage conveyer 20 configured based on a first single lane conveyer 21 and a second single lane conveyer 22, the number of single lane conveyers constituting next-stage conveyer 20 may be increased or decreased appropriately depending upon the processing capability of the processor disposed at the downstream side of next-stage conveyer 20.

The series of operations of acceleration unit 6 and ejection unit 7 will be described hereinafter with reference to Fig. 8. One egg transfer unit 3 retaining eggs E is conveyed in the X direction (while maintaining P1=76.2 mm). When the one egg transfer unit 3 arrives at a site where the distance between the virtual center line of the first egg transfer unit 3 crosswise to the conveying direction and the virtual center line of cups C on second single lane conveyer 22 of next-stage conveyer 20 (the center line along the direction identical to the conveying direction (Y direction) of next-stage conveyer 20) is approximately 85 mm, acceleration unit 6 urges the one egg transfer unit 3 and another egg transfer unit 3 located immediately following the one egg transfer unit 3 towards the arrow direction (direction identical to the conveying direction (Y direction) of next-stage conveyer 20) by approximately 37.5 mm to accelerate each of egg transfer units 3. Acceleration unit 6 further urges the one egg transfer unit 3 and the other egg transfer unit 3 immediately following the one egg transfer unit 3 towards the arrow direction (identical to the conveying direction (Y direction) of next-stage conveyer 20) by approximately 75 mm to cause the moving speed of the one egg transfer unit 3 and the other egg transfer unit 3 in the urging direction to be substantially in synchronization with the conveying speed of next-stage conveyer 20.

When the moving speed of the one egg transfer unit 3 and the other egg transfer unit 3 in the urging direction is substantially in synchronization with the conveying speed of next-stage conveyer 20 by the function of acceleration unit 6, ejection unit 7 ejects at one time eggs E retained in the one egg transfer unit 3 and the other egg transfer unit 3 to cups C of first and second single lane conveyers 21 and 22 of next-stage conveyer 20 while maintaining a predetermined pitch P2 between eggs (P2 = 76.2 mm).

In order to cause the urged one egg transfer unit 3 and the other egg transfer unit 3 to slow down, acceleration unit 6 effects deceleration while pushing the one egg transfer unit 3 and the other egg transfer unit 3 approximately 37.5 mm further in the arrow direction (the direction identical to the conveying direction (Y direction) of next-stage conveyer 20) to eventually cause the units to halt. Then, the urging mechanism (not shown) of acceleration unit 6 returns to the initial position.

The one egg transfer unit 3 and the other egg transfer unit 3 urged in the arrow direction (direction identical to the conveying direction (Y direction) of next-stage conveyer 20) to be gathered at one side end of endless delivery conveyer 11 are subsequently returned to the initial position (aligned around the center along the width relative to the conveying direction of endless delivery conveyer 11) during the transfer process by a guiding member (not shown) disposed at a predetermined position in the return path of endless chain 2.

Since the space W defined by egg transfer unit 3 moving aligned around the center along the width relative to the conveying direction of endless delivery conveyer 11 and one side end of endless delivery conveyer 11 is utilized for the operation of acceleration unit 6, the increased speed of next-stage conveyer 20 can be accommodated.

By first and second single lane conveyers 21 and 22 constituting next-stage conveyer 20 in egg transfer apparatus T of the present embodiment, the transfer of eggs E from endless delivery conveyer 11 to next-stage conveyer 20 is conducted by urging a plurality of egg transfer units 3 (the one egg transfer unit 3 and the other egg transfer unit 3) simultaneously to eject eggs E retained in the plurality of egg transfer units 3 (the one egg transfer unit 3 and the other egg transfer unit 3) to next-stage conveyer 20 at one time.

In the case where next-stage conveyer 20 includes only one single lane conveyer, the egg transfer apparatus may be configured to urge one egg transfer unit 3. In the case where next-stage conveyer 20 includes three, for example, single lane conveyers, the egg transfer apparatus may be configured to urge three eggs transfer units 3 at the same time.

Although the present embodiment has been described in which the series of operations of egg transfer unit 3 by acceleration unit 6, i.e. the stroke required for acceleration → synchronization → deceleration, is based on, but not limited to 37.5 mm + 75 mm + 37.5 mm = 150 mm, the stroke should be modified appropriately according to the conveying speed of next-stage conveyer 20.

The present embodiment has been described based on an example in which acceleration unit 6 urges the one egg transfer unit 3 and the other egg transfer unit 3 in the arrow direction (direction identical to the conveying direction (Y direction) of next-stage conveyer 20) to synchronize the moving direction of the one egg transfer unit 3 and the other egg transfer unit 3 in the urging direction substantially with the conveying speed of next-stage conveyer 20, and ejection unit 7 ejects at one time eggs E retained in the one egg transfer unit 3 and the other egg transfer unit 3 to respective cups C in first and second single lane conveyers 21 and 22 of next-stage conveyer 20 when synchronization with the conveying speed of next-stage conveyer 20 is established. However, the present invention is not limited thereto.

For example, the acceleration-ejection unit described in the first embodiment may be provided instead of acceleration unit 6 and ejection unit 7 to execute the series of operations of acceleration → synchronization → ejection when eggs E retained in egg transfer unit 3 are to be ejected at one time into respective cups C of first and second single lane conveyers 21 and 22 of next-stage conveyer 20.

Although the previous first embodiment and first embodiment have modification of the pitch between each of buckets 31a - 31f of egg transfer unit 3 effected through regulation plate 4, the pitch between each of buckets 31a - 31f may be modified by the members set forth below instead of regulation plate 4. An air cylinder, for example, may be employed to push cylindrical slide member 32a attached to slider 32 of egg transfer unit 3 in a direction opposite to the conveying direction (Y direction) of next-stage conveyer 20 to alter the pitch between each of buckets 31a - 31f of egg transfer unit 3 (narrow the pitch).

Alternative to the aforementioned air cylinder, the pitch modification unit may be configured as set forth below. An electromagnet may be attached at the outer side face of each of buckets 31a - 31f of egg transfer unit 3, which is energized when egg transfer unit 3 arrives short of the site immediately above next-stage conveyer 20, to draw buckets 31a - 31f of egg transfer unit 3 at one side end of endless delivery conveyer 11 while narrowing the pitch between each of buckets 31a - 31f of egg transfer unit 3.

The first and second embodiments have been described with next-stage conveyer 20 disposed below a predetermined position in the conveying path of endless delivery conveyer 11 and in a direction orthogonal to the conveying direction of endless delivery conveyer 11. In the case where the room for installing egg transfer apparatus T is restricted, the crossing angle between endless delivery conveyer 11 and next-stage conveyer 20 may be set to approximately 85 to 75 degrees, for example. In this case, it is to be noted that providing a new mechanism between endless delivery conveyer 11 and next-stage conveyer 20 as well as a mechanism for controlling the conveying speed of each conveyer are necessary.

In the previous first and second embodiments, the transfer of eggs E from endless delivery conveyer 11 to next-stage conveyer 20 has been described based on an example of "ejecting at one time eggs E retained in egg transfer unit 3 into cups C of first and second single lane conveyers 21 and 22 of next-stage conveyer 20. The present invention is not limited thereto. When eggs E retained in each of buckets 31a - 31f of egg transfer unit 3 are to be ejected into cups C of first and second single lane conveyers 21 and 22 of next-stage conveyer 20, the timing of ejection from each of buckets 31a - 31f may be delayed sequentially by every few hundredths of a second, for example, to be ejected into cups C of first and second single lane conveyers 21 and 22 of next-stage conveyer 20.

It should be understood that the embodiments disclosed herein are illustrative and non-restrictive in every respect. The scope of the present invention is defined by the terms of the claims, rather than the description above, and is intended to include any modification within the scope and meaning equivalent to the terms of the claims.

### INDUSTRIAL APPLICABILITY

The present invention is effectively utilized for transferring eggs.

## Claims

1. An egg transfer apparatus comprising:
an endless delivery conveyer (11) including a plurality of receptacle rows (3) provided in a conveying direction for retaining eggs, each receptacle row having a predetermined number of retaining seats (31a - 31f) crosswise to the conveying direction, and
a next-stage conveyer (2) disposed below a predetermined position in a conveying path of said endless delivery conveyer(11) in a direction crossing the conveying direction of said endless delivery conveyer (11), said egg transfer apparatus transferring eggs (E) conveyed by said endless delivery conveyer (11) to said next-stage conveyer (2) disposed in a crossing manner, said egg transfer apparatus comprising:
an acceleration unit (5, 6) urging said receptacle row (3) in a direction identical to the conveying direction of said next-stage conveyer (2) to approximate a conveying speed of said next-stage conveyer (2) when each receptacle row (3) of said endless delivery conveyer (11) arrives above said next-stage conveyer (2), and
an ejection unit (5, 7) ejecting eggs (E) retained in retaining seats of said receptacle row (3) into retaining seats (C) of said next-stage conveyer (2) when a moving speed of said receptacle row (3) towards said urging direction is synchronized with the conveying speed of said next-stage conveyer (2).

2. The egg transfer apparatus according to claim 1, wherein each of said predetermined number of retaining seats (31a - 31f) in a receptacle row (3) of said endless delivery conveyer (11) is attached in a slidable manner crosswise to the conveying direction,
said egg transfer apparatus further comprising a pitch modification unit (4) modifying a retaining seat pitch (P1) of said receptacle row (3) of said endless delivery conveyer (11) to a pitch equal to a retaining seat pitch (P3) of said next-stage conveyer (2) during a process of conveying eggs (E),
wherein, when eggs are ejected to retaining seats (C) of said next-stage conveyer (2) from said endless delivery conveyer (11) by said ejection unit (5, 7), said receptacle row (3) having a pitch modified equally to said retaining seat pitch (P3) of said next-stage conveyer (2) is caused to arrive above said next-stage conveyer (2).

3. The egg transfer apparatus according to claim 1, wherein a plurality of receptacle rows (3) of said endless delivery conveyer (11) are urged simultaneously when the receptacle row (3) of said endless delivery conveyer (11) is urged in a direction identical to the conveying direction of said next-stage conveyer (2) by said acceleration unit (5, 6).

4. An egg transfer apparatus comprising:
an endless delivery conveyer (11) including a plurality of receptacle rows (3) provided in a conveying direction for retaining eggs, each receptacle row having a predetermined number of retaining seats (31a - 31f) attached in a slidable manner crosswise to the conveying direction, and
a next-stage conveyer (2) disposed below a site partway in a conveying path of said endless delivery conveyer (11) in a direction crossing the conveying direction of the endless delivery conveyer (11), including a retaining seat (C) formed in a lane, said egg transfer apparatus transferring eggs (E) conveyed by said endless delivery conveyer (11) to said next-stage conveyer (2) disposed in a crossing manner, said egg transfer apparatus comprising:
a pitch modification unit (4) modifying a retaining seat pitch (P1) in a receptacle row (3) of said endless delivery conveyer (11) to a pitch equal to a retaining seat pitch (P3) of said next-stage conveyer (2) during a process of conveying eggs (E), and
an ejection unit (5, 7) ejecting eggs (E) retained in said retaining seats (31a - 31f) of said receptacle row (3) into retaining seats (C) of said next-stage conveyer(2) when said receptacle row (3) modified to a pitch equal to said retaining seat pitch (P3) of the next-stage conveyer (2) by said pitch modification unit (4) arrives above said next-stage conveyer.

5. The egg transfer apparatus according to claim 4, comprising an acceleration unit (5, 6) urging, when each receptacle row (3) of said endless delivery conveyer (11) arrives above said next-stage conveyer (2), said receptacle row (3) in a direction identical to the conveying direction of said next-stage conveyer (2) to approximate a conveying speed of said next-stage conveyer (2),
wherein, when eggs (E) are ejected into said retaining seats (C) of said next-stage conveyer (2) from said endless delivery conveyer (11) by said ejection unit (5, 7), a moving speed of said receptacle row (3) in said urging direction is synchronized with the conveying speed of said next-stage conveyer (2).

6. The egg transfer apparatus according to claim 4, wherein said pitch modification unit (4) includes a regulation plate (4) narrowing, during a process of conveying said receptacle unit (3), the retaining seat pitch (P1) of said receptacle row (3) to a pitch equal to the retaining seat pitch (P3) of the next-stage conveyer (2).

7. An egg transfer apparatus comprising:
an endless delivery conveyer (11) including a plurality of receptacle rows (3) provided in a conveying direction for retaining eggs, each receptacle row having a predetermined number of retaining seats (31a - 31f) attached in a slidable manner crosswise to the conveying direction,
a next-stage conveyer (2) disposed below a predetermined site in a conveying path of said endless delivery conveyer (11) in a direction orthogonal to the conveying direction of the endless delivery conveyer (11), including a retaining seat (C) formed in a lane,
a regulation plate (4) located partway in the conveying path of said endless delivery conveyer (11) to narrow a retaining seat pitch (P1) of said receptacle row (3) to a pitch equal to a retaining seat pitch (P3) of the next-stage conveyer (2) in the lane direction during a process of conveying a receptacle row (3),
an acceleration unit (5, 6) urging, when a receptacle row (3) of said endless delivery conveyer (11) narrowed to a pitch equal to the retaining seat pitch (P3) of the next-stage conveyer (2) in the lane direction by said regulation plate (4) arrives above said next-stage conveyer (2), said receptacle row (3) in a direction identical to the conveying direction of said next-stage conveyer (2) to accelerate to a conveying speed of said next-stage conveyer (2), and
an ejection unit (5, 7) ejecting eggs (E) retained in retaining seats (31a - 31f) of said receptacle row (3) into retaining seats (C) of said next-stage conveyer (2) when a moving speed of said receptacle row (3) in said urging direction is in synchronization with the conveying speed of said next-stage conveyer (2) by said acceleration unit (5, 6).

8. An egg transfer apparatus comprising:
an endless delivery conveyer (11) including a plurality of receptacle rows (3) provided in a conveying direction for retaining eggs, each receptacle row having a predetermined number of retaining seats (31a - 31f) attached in a slidable manner crosswise to the conveying direction,
a next-stage conveyer (2) disposed below a predetermined position in a conveying path of said endless delivery conveyer (11) in a direction orthogonal to the conveying direction of the endless delivery conveyer (11), including a retaining seat (C) formed in a lane,
a regulation plate (4) located partway in the conveying path of said endless delivery conveyer (11) to narrow a retaining seat pitch (P1) of said receptacle row (3) to a pitch equal to a retaining seat pitch (P3) of the next-stage conveyer (2) in the lane direction during a process of conveying a receptacle row (3), and
an acceleration-ejection unit (5) urging, when a receptacle row (3) of said endless delivery conveyer (11) narrowed to a pitch equal to the retaining seat pitch (P3) of the next-stage conveyer (2) in the lane direction by said regulation plate (4) arrives above said next-stage conveyer (2), said receptacle row (3) in a direction identical to the conveying direction of said next-stage conveyer (2) to synchronize a moving speed of said receptacle row (3) towards said urging direction with a conveying speed of said next-stage conveyer (2), and ejecting eggs (E) retained in the retaining seats (31a - 31f) of said receptacle row (3) into retaining seats (C) of the next-stage conveyer (2).

9. The egg transfer apparatus according to claim 8, wherein
said regulation plate (4) regulates each retaining seat in a receptacle row (3) of the endless delivery conveyer (11) at one side end of said endless delivery conveyer (11), and
said acceleration-ejection unit (5) urges the receptacle row (3) narrowed to a pitch equal to the retaining seat pitch (P3) of said next-stage conveyer (2) in the lane direction by said regulation plate (4) towards an other side end from said one side end in a direction crosswise to the conveying direction of said endless delivery conveyer (11).
